(19) Europäisches Patentamt

European Patent Office

Office européen des brevets

(11) EP 0 910 173 A1

(12) DEMANDE DE BREVET EUROPEEN

(43) Date de publication:
21.04.1999 Bulletin 1999/16

(51) Int Cl.⁶: H04B 1/04

(21) Numéro de dépôt: 98402564.3

(22) Date de dépôt: 15.10.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 16.10.1997 FR 9712986

(71) Demandeur: ALCATEL
75008 Paris (FR)

(72) Inventeurs:
• Broux, Denis
75011 Paris (FR)
• Dezelak, Nadia
75011 Paris (FR)
• Broyer, Jean
77400 Pomponne (FR)
• Marguinaud, André
91120 Palaiseau (FR)

(74) Mandataire: Smith, Bradford Lee et al
COMPAGNIE FINANCIERE ALCATEL
Dépt. Propr. Industrielle,
30, avenue Kléber
75116 Paris (FR)

(54) **Système de communication comportant des antennes d'émission et de réception proches les unes des autres**

(57) L'invention concerne un système de communication comportant au moins une antenne d'émission (10) proche d'au moins une antenne de réception (12₁, 12₂, 12₃), l'émission produisant des signaux dans la bande des fréquences de réception.

Ce système comporte un circuit de neutrodynage d'émission (16) destiné à fournir un signal de correction, pour éliminer seulement les signaux perturbateurs dont la fréquence se trouve dans la bande des fréquences des signaux de réception. Le circuit de neutrodynage d'émission (16) est en amont d'un amplificateur (20), et il comprend des moyens pour évaluer, dans la bande des fréquences utiles de réception, un nombre limité de paramètres de l'amplificateur de puissance (20) alimentant l'antenne d'émission (10), cette évaluation de paramètres étant effectuée à partir des signaux d'entrée et de sortie de cet amplificateur. Le circuit (16) évalue aussi les signaux provoquant la perturbation avant l'entrée de l'amplificateur ; cette évaluation des signaux perturbateurs est effectuée en fonction des paramètres calculés et du signal à l'entrée de l'amplificateur.

Application aux systèmes de transmission à bord de navires ou véhicules spatiaux.

FIG.1

**Description**

La présente invention est relative à un système de télécommunication à antennes dans lequel au moins une antenne d'émission et au moins une antenne de réception sont à proximité l'une de l'autre.

Dans des navires, des satellites ou des plates-formes spatiales par exemple, il est fréquent que les antennes d'émission et de réception soient proches les unes des autres. Il faut donc prendre des précautions pour que les signaux émis ne perturbent pas la voie de réception. En général, les bandes de fréquences d'émission sont distinctes des bandes de fréquences de réception. Toutefois, une telle séparation n'est pas toujours suffisante car il apparaît souvent des signaux perturbateurs en dehors de la bande d'émission.

Les signaux perturbateurs sont notamment les signaux résultant de la combinaison des signaux provenant de deux émissions ou davantage à fréquences porteuses distinctes. Cette combinaison étant algébrique, elle produit des signaux perturbateurs à des fréquences se trouvant dans les bandes d'émission et dans les bandes de réception.

Ainsi, quand deux signaux centrés sur des fréquences $F_1$ et $F_2$ traversent le même amplificateur, il se produit des signaux parasites centrés sur les fréquences $F_1 - F_2$, $F_1 + F_2$, $2F_1 \pm F_2$, etc.

Les signaux perturbateurs peuvent aussi être constitués par des harmoniques d'un signal mono-ton (à une seule fréquence).

Les signaux perturbateurs ont pour origine des non-linéarités de la chaîne de transmission, notamment les amplificateurs. Ils sont d'autant plus gênants qu'il est difficile de découpler les aériens d'émission des aériens de réception.

Diverses solutions ont été proposées pour éliminer les signaux d'intermodulation dans des transmissions multi-tons, c'est-à-dire multi-fréquences, en bande large. Ces solutions consistent le plus souvent à modifier les signaux à émettre de façon à corriger l'élément non-linéaire.

On a constaté que les méthodes connues n'apportent pas de solution satisfaisante.

Le système selon l'invention permet une réception soumise à un minimum de perturbations provenant des signaux émis à proximité.

Il est caractérisé en ce qu'il comprend un moyen de neutrodynage à l'émission et, éventuellement, à la réception, qui est destiné à éliminer seulement les signaux perturbateurs dont les fréquences se trouvent dans la bande utile de réception. Ainsi le neutrodynage étant limité aux bandes de réception il permet d'utiliser au maximum les moyens de traitement, notamment les moyens de calculs, pour le but recherché.

Par "neutrodynage", on entend que l'on fournit aux amplificateurs d'émission et, le cas échéant, aux récepteurs un signal visant à éliminer seulement les signaux perturbateurs gênant la réception.

Dans le cas de l'émission le moyen de neutrodynage comprend : un moyen pour évaluer, dans la bande des fréquences utiles, un nombre limité de paramètres de l'amplificateur de puissance, cette évaluation étant effectuée à partir des signaux d'entrée et de sortie de cet amplificateur, un moyen d'évaluation des signaux provoquant la perturbation avant l'entrée de l'amplificateur, cette évaluation étant effectuée en fonction des paramètres calculés et du signal de l'amplificateur d'entrée et un moyen pour retrancher du signal d'entrée de l'amplificateur le signal générateur de perturbation, gênant la réception.

Par exemple, le perturbateur synthétisé est en opposition de phase avec le signal perturbateur réel.

On part de l'observation que le niveau du signal perturbateur gênant (dans les bandes de réception amies et proches de l'émetteur ami) est faible devant le niveau du signal d'émission principal. Dans ces conditions, le gain complexe instantané de l'amplificateur de puissance n'est pas modifié par le signal de correction.

Il est à noter que le moyen de calcul ou évaluation des paramètres de l'amplificateur et le moyen d'évaluation des signaux générateurs de perturbations ne fonctionnent pas comme une boucle de rétroaction. On a en effet constaté que le neutrodynage peut s'effectuer en boucle ouverte car les caractéristiques de l'amplificateur de puissance évoluent lentement.

Autrement dit, dans un mode de réalisation préféré de l'invention, on établit un modèle de l'amplificateur et on utilise ce modèle pour éliminer les perturbateurs dans chaque bande de réception.

Quand on fait appel à des signaux analytiques, le modèle de l'amplificateur peut être établi à partir du seul module du signal analytique à amplifier car l'effet d'un amplificateur réel est un gain réel et un déphasage qui sont seulement fonction du module de ce signal analytique à amplifier. Il en résulte une relative simplicité de calcul et de la quantité de mémoire nécessaire compte tenu des largeurs de bande élémentaires. Comme on le verra plus loin, le signal de correction est une somme pondérée de fonctions simples des signaux élémentaires émis ou de leurs produits.

Étant donné que l'élimination des perturbateurs n'est effectuée que pour la bande des fréquences à recevoir, le modèle de l'amplificateur est simple. On a constaté qu'en pratique il suffisait de déterminer trois ou quatre paramètres de cet amplificateur pour chaque sous-bande neutrodynée. Ces paramètres sont, dans une réalisation, le déphasage du gain et son module nominal avec, éventuellement, un paramètre lié à la courbure ou à la pente de la courbe liant ce gain au module du signal d'entrée.

Ce traitement s'applique tant aux non-linéarités analytiques qu'aux non-linéarités instantanées. On rappelle ici que, dans une non-linéarité analytique, le gain complexe est fonction du module de la représentation analytique du signal réel à amplifier et que, dans une non-linéarité instantanée, le gain réel est fonction de l'amplitude instantanée du signal réel à amplifier.

Le modèle de l'amplificateur est établi à partir de la représentation analytique du signal à amplifier.

Dans le cas d'un neutrodynage à la réception, c'est-à-dire un neutrodynage passif, qui vient compléter le neutrodynage actif, on fait appel à une mesure des signaux perturbateurs recueillis à l'antenne d'émission. Par contre, le signal perturbateur est retranché du signal reçu avec un gain complexe.

Si on utilise des signaux analytiques on applique au signal perturbateur à retrancher un gain qui est indépendant du module analytique du signal à recevoir. Ce gain complexe dépend du degré de corrélation entre le signal perturbateur mesuré et le signal reçu. Il est donc déterminé, par exemple, à l'aide d'une corrélation entre le signal reçu et le signal perturbateur mesuré. L'estimation obtenue est alors, de préférence, appliquée à un instant se trouvant sensiblement au centre de l'intervalle temporel d'estimation afin de tenir compte des dérives.

Quand on fait appel à un traitement analytique de signaux échantillonnés on tire avantage du fait que les signaux considérés sont dans une bande limitée de fréquences, à savoir la bande de réception.

Le traitement numérique s'appuie, en premier lieu, sur le fait que tout signal réel peut être représenté grâce à des échantillons complexes évoluant au rythme B, B étant la bande de fréquences dans laquelle se trouve le signal réel. En second lieu, ce traitement se base sur le fait que, sur un intervalle de temps fini, ce signal peut être représenté, avec une précision uniforme, au moyen d'une somme finie de sinusoïdes dont chacune a une fréquence qui appartient à la bande de fréquences B. Pour obtenir le signal complexe associé à un signal réel de bande de fréquences B et de fréquence centrale F il suffit d'effectuer un échantillonnage temporel ayant un pas $\Delta t$ tel que :

$$F\Delta t = \frac{\pm\Pi}{2} \text{ (modulo } 2K\Pi) \pm\varepsilon$$

Dans cette formule, $\varepsilon$ est la précision souhaitée, par exemple 30%.

L'évaluation de chaque composante (x et y) en quadrature associée à une suite d'échantillons réels d'un signal est obtenue grâce à une fonction linéaire de ces échantillons. La fonction est symétrique pour la composante x et elle est antisymétrique pour la composante y.

Pour déterminer la fréquence d'échantillonnage convenable permettant d'obtenir une bonne quadrature, en principe deux conditions sont à respecter :

- la première condition est que la fréquence d'échantillonnage réel doit être supérieure à environ dix fois la plus grande bande passante des différents signaux. De cette manière on peut effectuer tous les calculs avec le même échantillonneur réel.

- la seconde condition est que la fréquence d'échantillonnage réel doit vérifier la condition de quadrature de tous les signaux pris en considération ; cette condition s'exprime par la relation suivante :

$$\frac{2\Pi f}{f_e} = \frac{\pm\Pi}{2}(1 + \alpha) + 2K\Pi$$

Dans cette formule, f est la fréquence d'un signal à échantillonner et $f_e$ est la fréquence d'échantillonnage, le paramètre $\alpha$ ayant pour valeur environ $\pm$ 20% ; ce dernier paramètre détermine la complexité, c'est-à-dire le nombre de coefficients, du calcul des composantes x et y.

L'échantillonnage analytique d'un signal permet d'obtenir rapidement des calculs d'une précision suffisante.

Pour des détails sur l'échantillonnage analytique, on se reportera notamment au brevet français N° 2707119 intitulé "Procédé de calculs de coefficients de pondération pour un numériseur analytique pour traitement de signal, et numériseur analytique", et déposé le 1er juillet 1993.

D'autres caractéristiques et avantages de l'invention apparaîtront avec la description de certains de ses modes de réalisation, celle-ci étant effectuée en se référant aux dessins ci-annexés sur lesquels :

la figure 1 est un schéma d'un système selon l'invention, et
les figures 2 et 3 sont des diagrammes expliquant le fonctionnement du système de la figure 1.

L'exemple de réalisation de l'invention que l'on va décrire en relation avec les figures, est un système de transmission à bord d'un navire qui comporte une antenne 10 d'émission et trois antennes $12_1$, $12_2$ et $12_3$ de réception.

Les fréquences des signaux émis par l'antenne 10 sont distinctes des fréquences des signaux devant être reçus par les antennes $12_1$ à $12_3$.

EP 0 910 173 A1

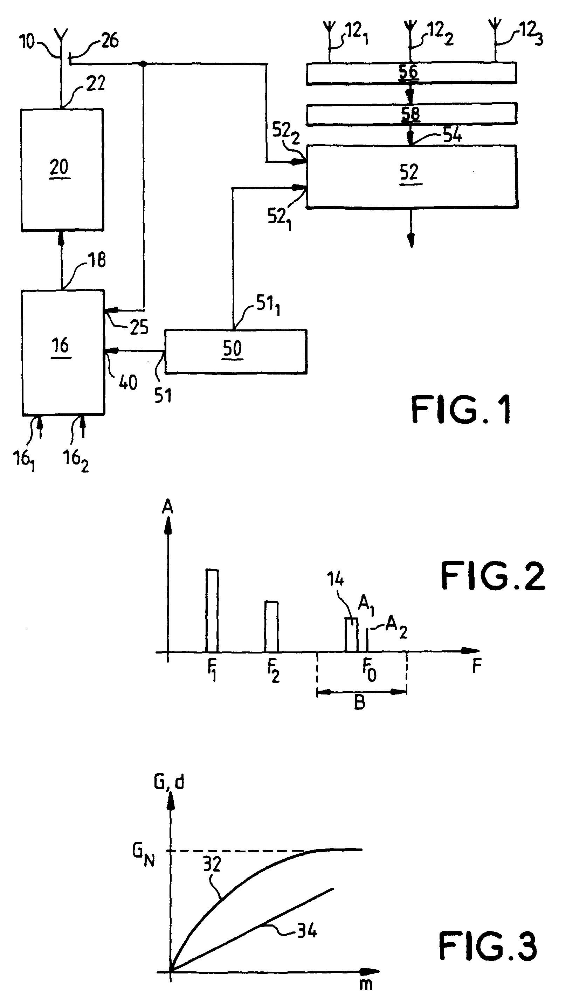

Sur le diagramme de la figure 2, les fréquences F ont été portées en abscisses, tandis que les amplitudes des signaux ont été portées en ordonnées. On voit sur ce diagramme que les signaux sont émis à des fréquences $F_1$ et $F_2$ se trouvant en dehors de la bande B des fréquences de réception.

Mais l'intermodulation des signaux à des fréquences différentes $F_1$ et $F_2$, émis sur la même antenne 10 ou sur des antennes différentes, produit des signaux à des fréquences qui peuvent se trouver dans la bande B. Ainsi, on a représenté une raie 14 résultant d'une combinaison linéaire des fréquences $F_1$ et $F_2$, cette raie 14 se trouvant dans la bande B de réception. Cette raie 14 a une amplitude $A_1$ supérieure à l'amplitude $A_2$ du signal à recevoir.

Il est donc essentiel d'éliminer ces bruits d'intermodulation 14. Il est aussi nécessaire d'éliminer les harmoniques d'émission qui peuvent se trouver dans la bande de réception.

C'est le but du système représenté sur la figure 1 qui permet d'éliminer les signaux perturbateurs se trouvant dans la bande de réception.

Dans l'installation représentée sur la figure 1, on prévoit un circuit 16 de neutrodynage de type actif, c'est-à-dire qui élimine les signaux perturbateurs avant l'émission sur l'antenne 10, ainsi qu'un circuit de neutrodynage de type passif. Le circuit de neutrodynage passif complète l'effet du circuit de neutrodynage actif.

Dans l'exemple on prévoit que l'antenne d'émission 10 reçoit deux signaux utiles ainsi que le signal de neutrodynage. Ces signaux traversent un amplificateur 20 dont la sortie est reliée à l'antenne 10. Ainsi, un seul amplificateur est prévu pour la transmission de deux (ou davantage) signaux utiles. De plus, on notera dès à présent que l'installation ne corrige pas les paramètres de l'amplificateur, mais permet l'émission d'un signal de neutrodynage, ce signal étant transmis de la même manière que les signaux utiles.

Le circuit 16 comporte donc deux entrées, respectivement $16_1$ et $16_2$, pour les signaux utiles à transmettre vers l'antenne 10 par l'intermédiaire de l'amplificateur 20. La sortie 18 du circuit 16 est reliée à l'entrée de l'amplificateur 20.

Les signaux délivrés sur la sortie 18 sont traités de façon telle que l'antenne 10 émette des signaux qui ne perturberont pas la réception.

Les perturbations proviennent principalement des non-linéarités de l'amplificateur 20.

Le circuit 16 effectue la synthèse des signaux à appliquer à l'amplificateur 20, et effectue aussi la synthèse des signaux perturbateurs et leur soustraction. Enfin, le circuit 16 permet de calculer, dans la bande des fréquences de réception, les paramètres de l'amplificateur 18 qui interviennent dans la perturbation.

A partir de ces paramètres, le circuit 16 calcule le signal de perturbation dans la bande des fréquences de réception et applique le signal représentant la perturbation en opposition de phase aux signaux appliqués sur les entrées $16_1$ et $16_2$.

Pour la mesure des paramètres de l'amplificateur, le circuit 16 comporte une entrée 25 recevant un signal représentant le signal de sortie de l'amplificateur 20. A cet effet, un coupleur 26 est prévu pour dériver un signal de l'antenne 10 vers l'entrée 25.

Les paramètres de l'amplificateur sont dans l'exemple, au nombre de trois. Il s'agit, d'une part, du gain nominal $G_N$ (figure 3) de l'amplificateur, d'autre part, d'un paramètre représentant la courbe 32 de variation du gain en fonction du module du signal d'entrée de l'amplificateur et, d'autre part, enfin, d'un paramètre représentant le déphasage. Dans l'exemple, tel que représenté sur le diagramme de la figure 3, le déphasage d varie de façon pratiquement linéaire en fonction du module m du signal d'entrée, comme représenté par la droite 34. Dans ces conditions, le paramètre représentant le déphasage est, dans cet exemple, la pente de la droite 34.

Le paramètre représentant la courbe 32 de variation du gain en fonction du module d'entrée est, par exemple, le rayon de courbure de la partie de la courbe 32 entre l'origine O et la valeur nominale $G_N$.

Étant donné que, pour le calcul des perturbations, il est essentiel de connaître les fréquences de réception et aussi d'émission, le circuit 16 est relié aux sorties d'un circuit 50 délivrant des signaux représentant les fréquences d'émission et de réception. Ce circuit 50 comporte une première sortie 51 reliée à une entrée 40 du circuit 16.

Par ailleurs, le circuit 16 reçoit par l'entrée 25 une information sur les fréquences que l'antenne 10 est en train d'émettre.

Les paramètres des amplificateurs sont calculés en temps réel dans le circuit 16. Ils constituent une représentation, ou un modèle, de l'amplificateur à l'origine de la perturbation, et le circuit 16 calcule, à partir de ces paramètres, et donc du modèle de l'amplificateur, dans le mode de réception considéré, la perturbation apportée par l'amplificateur afin de produire les signaux correcteurs.

On notera que ce neutrodynage n'est pas une contre-réaction de type classique qui risquerait d'introduire des retards de signaux.

Il est vrai que, dans le cas présent, les paramètres de l'amplificateur sont calculés à un instant antérieur à l'instant au cours duquel est effectuée la correction. Mais ce décalage est sans conséquence car les paramètres de l'amplificateur évoluent lentement.

Comme indiqué ci-dessus pour le calcul on utilise de préférence la méthode de l'échantillonnage analytique. Pour cet échantillonnage analytique, outre les conditions qui ont été indiquées plus haut en ce qui concerne les fréquences, il faut prendre des précautions pour que la référence de temps soit la même pour tous les signaux. On utilisera donc avantageusement un échantillonneur commun aux signaux.

On décrit ci-après des principes de calcul permettant de déterminer les paramètres de l'amplificateur ainsi que le signal de correction.

Pour ce calcul, on se base sur le fait que le signal de sortie s(t) d'un amplificateur est relié au signal d'entrée e(t) par la relation linéaire suivante :

$$(1) \qquad s(t) = g\left[r^2(t)\right]e(t)$$

Dans cette formule :

$$(2) \qquad r^2(t) = e(t)e^*(t)$$

$e^*(t)$ signifie le complexe conjugué de e(t).

En outre, la fonction $g[r^2(t)]$ est un gain complexe qui peut être représenté sous la forme d'un polynôme du second degré en $r^2$ :

$$(3) \qquad g(r^2) = G[1 + ar^2 + br^4]$$

Dans cette formule, a et b sont des coefficients complexes qui peuvent être déterminés par approximation (de façon empirique) de diverses manières. Une première manière consiste à déterminer le gain réel ou le déphasage en fonction du module du signal d'entrée et à rechercher une approximation uniforme dans l'intervalle utile du module ou une approximation qui tient compte de l'histogramme du module du signal entrant. Une autre méthode consiste à évaluer les trois coefficients complexes à partir d'échantillons réels en minimisant une forme quadratique convenablement choisie.

A partir des formules (1) et (3) ci-dessus, on peut déterminer la manière dont l'amplificateur perturbe les signaux utiles dans leurs bandes de fréquences et les signaux parasites créés en dehors des bandes utiles. A cet effet, on calcule la transformée de Fourier S(f) du signal s(t). Cette transformée de Fourier est le produit de convolution des transformées de Fourier des fonctions $g[r^2(t)]$ et e(t) de la formule (1) si les conditions classiques de Dirichlet sont satisfaites.

Pour déterminer la transformée de Fourier de s(t), il faut principalement déterminer la transformée de Fourier de $r^2(t)$.

On considère tout d'abord le cas où l'amplificateur transmet un signal à bande limitée, c'est-à-dire un signal de pulsation centrale $\omega_1$ et de largeur de bande $\Delta\omega_1/2\pi$.

Dans ce cas, on peut montrer que la transformée de Fourier $R(\omega)$ de $r^2(t)$ peut s'écrire :

$$(4) \qquad R(\omega) = \frac{1}{\sqrt{2\pi}} \int_{-\infty}^{+\infty} E(\gamma)E^*(\gamma - \omega)d\gamma$$

Dans cette formule, $E(\gamma)$ est la transformée de Fourier du signal e(t).

On voit qu'avec la relation (4), la transformée de Fourier de la fonction réelle $r^2(t)$ satisfait à la relation suivante :

$$(5) \qquad R(\omega) = R^*(-\omega)$$

Cette transformée est ainsi centrée sur la pulsation zéro et est d'étendue totale $\Delta\omega_1/\pi$, c'est-à-dire présente une largeur de bande double de celle de $E(\omega)$.

On peut aussi montrer que la transformée de Fourier de $r^4(t)$ est centrée sur la fréquence zéro et occupe une largeur de $3\Delta\omega_1/\pi$, soit 6 fois la largeur de $E(\omega)$.

En général, le signal E(t) peut être considéré comme étant constitué par une pluralité de signaux à bande étroite espacés les uns des autres. En d'autres termes, le signal d'entrée e(t) peut être représenté par la formule ci-

dessous :

$$(6) \qquad e(t) = \sum_i e_i(t)$$

La pulsation de chaque signal $e_i(t)$ est $\omega_i$ et sa largeur de bande est $\Delta\omega_i/2\pi = \Delta f_i$.

Dans ces conditions, les signaux $g(r^2)$ et $s(t)$ des formules (1) et (3) peuvent s'écrire :

$$(7) \quad \begin{cases} g\left(r^2\right) = G\left[1 + a\left|\sum_i e_i(t)\right|^2 + b\left|\sum_i e_i(t)\right|^4\right] \\ s(t) = g\left(r^2\right)\sum_i e_i(t) \end{cases}$$

On prend pour exemple un cas où le signal $e(t)$ est la somme de trois signaux $e_1(t)$, $e_2(t)$ et $e_3(t)$ centrés autour de fréquences positives $F_1$, $F_2$ et $F_3$.

Dans ces conditions, le signal émis a, à un facteur constant près, la forme suivante :

$$(8) \qquad s(t) \propto e(t)\left[1 + ae(t)e^*(t)\right],$$

soit :

$$s(t) \propto \left[e_1(t) + e_2(t) + e_3(t)\right]\left[1 + a\left(e_1(t) + e_2(t) + e_3(t)\right)\left(e_1^*(t) + e_2^*(t) + e_3^*(t)\right)\right]$$

Ces formules montrent que le spectre occupé comporte des sous-bandes dont les fréquences centrales sont les suivantes :

$$(9) \qquad F_1, F_2, F_3, \left|2F_1\text{-}F_2\right|, \left|2F_2\text{-}F_3\right|, \left|2F_3\text{-}F_1\right|, \left|2F_1\text{-}F_3\right|,$$

$$\left|2F_2\text{-}F_1\right|, \left|2F_3\text{-}F_2\right|, \left|F_2\text{+}F_3\text{-}F_1\right|, \left|F_1\text{+}F_3\text{-}F_2\right|, \left|F_1\text{+}F_2\text{-}F_3\right|$$

En effet, le signal de fréquence centrale $F_1$ correspond à l'expression :

$$(10) \qquad e_1(t)\left[1 + a\left(e_1(t)e_1^*(t) + 2e_2(t)e_2^*(t) + 2e_3(t)e_3^*(t)\right)\right] \quad;$$

le signal de fréquence $2F_1\text{-}F_2$ correspond à :

$$(11) \qquad ae_1^2(t)e_2^*(t) \, ;$$

le signal de fréquence centrale $F_2\text{+}F_3\text{-}F_1$ correspond à :

$$(12) \qquad 2ae_2(t)e_3(t\, e_1^*(t)$$

Les signaux correspondant aux fréquences centrales (9) ci-dessus correspondent à un modèle strictement analytique. Toutefois, il faut tenir compte aussi des non-linéarités instantanées qui provoquent des produits d'intermodulation aux fréquences $2F_1$, $F_1\text{+}F_2$, etc.

Pour l'analyse des non-linéarités instantanées, on peut se baser sur le fait que le signal de sortie a la forme suivante :

$$(13) \quad e(t) + e^*(t) + \alpha[e(t) + e^*(t)]^2 + \beta[e(t) + e^*(t)]^3 + \ldots$$

On peut montrer qu'une combinaison du modèle analytique et du modèle ci-dessus de non-linéarités instantanées, limitée au premier terme du développement permet d'écrire :

$$(14) \quad s(t) = G\left[e(t) + \alpha e^*(t) + \beta(e(t) + e^*(t))^2 + ae^2(t)e^*(t)\right].$$

Ce modèle fait appel à quatre paramètres complexes G, $\alpha$, $\beta$ et a. Il montre l'existence de sous-bandes centrées en $2F_1$, $2F_2$, $2F_3$, $F_1+F_2$, $F_2+F_3$, $F_1+F_3$, $|F_1-F_2|$, $|F_2-F_3|$ et $|F_1-F_3|$.

En général, les modules des paramètres $\alpha$, $\beta$ et a sont petits devant l'unité, par exemple inférieurs à 0,2.

Ces paramètres permettent de déterminer les signaux perturbateurs grâce à la formule (14) ci-dessus.

Ces paramètres peuvent être déterminés par mesure de signaux perturbateurs. A titre d'exemple, le signal perturbateur à fréquence $F_1+F_2$ est représenté par $2G\beta e_1(t)e_2(t)$. Ce paramètre $2G\beta$ est estimé à partir du signal perturbateur mesuré $P(F_1+F_2,t)$ qui satisfait à la relation suivante :

$$(15) \quad P(F_1 + F_2, t) \approx 2G\beta e_1(t)e_2(t).$$

Ainsi, le paramètre $2G\beta$ peut être déterminé par la relation suivante :

$$(16) \quad \overline{2G\beta} = \frac{\sum_t P(F_1 + F_2, t)e_1^*(t)e_2^*(t)}{\sum_t |e_1(t)e_2(t)|^2}.$$

Dans cette formule (16), Les sommes sur t correspondent à un échantillonnage complexe dont le rythme est égal à la bande du signal $e_1(t)$ $e_2(t)$.

Pour éliminer le perturbateur, on retranche de e(t) le signal perturbateur estimé à la fréquence $F_1+F_2$ par la relation :

$$(17) \quad P(F_1 + F_2, t) = 2\overline{G\beta}e_1(t)e_2(t)$$

Dans l'exemple considéré ci-dessus à trois fréquences d'émission $F_1$, $F_2$ et $F_3$, le signal perturbateur de la fréquence $F_1$ est, compte tenu de la formule (14) ci-dessus :

$$(18) \quad P(F_1, t) = G\left[\alpha e_1^*(t) + ae_1(t)\left(e_1(t)e_1^*(t) + 2e_2(t)e_2^*(t) + 2e_3(t)e_3^*(t)\right)\right]$$

Pour déterminer les paramètres $\alpha$ et a, on peut résoudre le système de deux équations suivant :

(19)

$$\begin{cases} \sum_t P(F_1, t)e_1(t) = \sum_t e_1^2(t) + \alpha \sum_t e_1(t)e^*(t) + a\sum_t e_1^2(t)\left[|e_1(t)|^2 + |e_2(t)|^2 + |e_3(t)|^2\right] \\ \sum_t P(F_1, t)e_1^*(t) = \sum_t |e_1(t)|^2 + \alpha \sum_t e_1^2(t) + a\sum_t |e_1(t)|^2\left[|e_1(t)|^2 + |e_2(t)|^2 + |e_3(t)|^2\right] \end{cases}$$

Pour le neutrodynage actif, le signal $\varepsilon_1$ destiné à corriger un signal $F_1$, est donné par l'expression suivante :

$$(20) \quad -\varepsilon_1(t) = G\left[\alpha e_1^*(t) + a\left(|e_1(t)|^2 + |e_2(t)|^2 + |e_3(t)|^2\right)\right]$$

Les autres corrections se déduisent de manière analogue des considérations ci-dessus et notamment de la formule (14).

Il est à noter que les signaux de correction peuvent être à l'origine de nouveaux signaux perturbateurs, mais, en pratique, le niveau de ces nouveaux signaux perturbateurs est négligeable.

Pour le neutrodynage passif, c'est-à-dire l'élimination des perturbations dans le circuit de réception, le circuit 50 fournit des informations concernant les fréquences d'émission et les fréquences de réception à un circuit 52 de neutrodynage. Ces informations sont appliquées sur une entrée $52_1$. Le circuit 52 présente, par ailleurs, une entrée $52_2$ recevant un signal représentant le signal appliqué sur l'antenne 10 et une entrée principale 54 reliée aux antennes de réception $12, 12_2, 12_3$ par l'intermédiaire de préamplificateurs 56 et d'un numériseur 58.

Ce circuit 52 comporte des moyens de calcul pour éliminer les signaux perturbateurs. Cette élimination tient compte, d'une part, du signal d'émission $52_1$, d'autre part, des fréquences d'émission et de réception et, d'autre part enfin, du signal d'émission mesuré.

## Revendications

1. Système de communication comportant au moins une antenne d'émission (10) proche d'au moins une antenne de réception ($12_1$, $12_2$, $12_3$), l'émission produisant des signaux dans la bande des fréquences de réception, caractérisé en ce qu'il comporte un circuit de neutrodynage d'émission (16) destiné à fournir un signal de correction, pour éliminer seulement les signaux perturbateurs dont la fréquence se trouve dans la bande des fréquences des signaux de réception.

2. Système selon la revendication 1, caractérisé en ce que le circuit de neutrodynage d'émission (16) est en amont d'un amplificateur (20).

3. Système selon la revendication 2, caractérisé en ce que le circuit de neutrodynage comprend des moyens pour évaluer :

   - dans la bande des fréquences utiles de réception, un nombre limité de paramètres de l'amplificateur de puissance (20) alimentant l'antenne d'émission (10), cette évaluation de paramètres étant effectuée à partir des signaux d'entrée et de sortie de cet amplificateur,
   - les signaux provoquant la perturbation avant l'entrée de l'amplificateur, cette évaluation des signaux perturbateurs étant effectuée en fonction des paramètres calculés et du signal à l'entrée de l'amplificateur,

   le circuit de neutrodynage retranchant du signal d'entrée de l'amplificateur le signal générateur de perturbations ainsi évalué.

4. Système selon la revendication 3, caractérisé en ce que l'élimination des perturbateurs s'effectue en boucle ouverte.

5. Système selon l'une quelconque des revendications précédentes, caractérisé en ce que le circuit de neutrodynage (16) fait appel à un traitement à échantillonnage analytique.

6. Système selon la revendication 5, caractérisé en ce que le circuit (16) de neutrodynage comporte un échantillonneur commun aux signaux à émettre de façon que ces derniers soient soumis à la même base de temps.

7. Système selon la revendication 3, caractérisé en ce que les moyens pour évaluer un nombre limité de paramètres de l'amplificateur sont basés sur le fait que le gain $g(r^2)$ de l'amplificateur peut être représenté sous la forme d'un polynôme du second degré en $r^2$, avec :

$$r^2(t) = e(t)e*(t),$$

e(t) étant la représentation complexe du signal à l'entrée de l'amplificateur et e*(t) son complexe conjugué.

8. Système selon la revendication 7, caractérisé en ce que le polynôme du second degré en $r^2$ est de la forme :

$$g(r^2) = G[1 + ar^2 + br^4],$$

les valeurs G, a et b étant des coefficients complexes.

9. Système selon la revendication 2, caractérisé en ce que le circuit de neutrodynage comprend des moyens pour établir un modèle de l'amplificateur (20) et des moyens utilisant ce modèle pour éliminer les perturbateurs dans chaque bande de réception.

10. Système selon la revendication 9, caractérisé en ce que le circuit de neutrodynage faisant appel à un traitement à échantillonnage analytique, le modèle de l'amplificateur est établi à partir de la représentation analytique du signal à amplifier.

11. Système selon l'une quelconque des revendications précédentes, caractérisé en ce qu'il comprend, en outre, un moyen de neutrodynage à la réception faisant appel à une mesure des signaux perturbateurs recueillis sur l'antenne d'émission, le signal perturbateur étant retranché du signal reçu avec un gain complexe.

FIG.1

FIG.2

FIG.3

# EP 0 910 173 A1

**Office européen des brevets**

## RAPPORT DE RECHERCHE EUROPEENNE

Numéro de la demande

EP 98 40 2564

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 049 832 A (CAVERS JAMES K) 17 septembre 1991 * abrégé * * colonne 2, ligne 15 - ligne 68 * * colonne 7, ligne 58 - colonne 8, ligne 30 * * figure 3 * * figure 5 * | 1-7,9,10 | H04B1/04 |
| A | US 4 952 193 A (TALWAR ASHOK K) 28 août 1990 * abrégé * * colonne 2, ligne 31 - colonne 3, ligne 33 * * colonne 6, ligne 56 - colonne 7, ligne 7 * * colonne 8, ligne 25 - ligne 47 * * figure 4 * | 1,11 | |

**DOMAINES TECHNIQUES RECHERCHES (Int.Cl.6)**

H04B
H03F
H04L

Le présent rapport a été établi pour toutes les revendications

| Lieu de la recherche | Date d'achèvement de la recherche | Examinateur |
|---|---|---|
| LA HAYE | 14 janvier 1999 | Lindhardt, U |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

11

**ANNEXE AU RAPPORT DE RECHERCHE EUROPEENNE
RELATIF A LA DEMANDE DE BREVET EUROPEEN NO.**

EP 98 40 2564

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-01-1999

| Document brevet cité au rapport de recherche | | Date de publication | Membre(s) de la famille de brevet(s) | Date de publication |
|---|---|---|---|---|
| US 5049832 | A | 17-09-1991 | AUCUN | |
| US 4952193 | A | 28-08-1990 | AUCUN | |

EPO FORM P0460